(19) **Europäisches Patentamt**

**European Patent Office**

**Office européen des brevets**

(11) **EP 0 743 201 B1**

(12) **EUROPEAN PATENT SPECIFICATION**

(45) Date of publication and mention
of the grant of the patent:
**11.08.1999 Bulletin 1999/32**

(51) Int. Cl.$^6$: **B60C 11/00**

(21) Application number: **96303320.4**

(22) Date of filing: **13.05.1996**

(54) **Pneumatic tyre**

Luftreifen

Bandage pneumatique

(84) Designated Contracting States:
**DE FR GB**

(30) Priority: **15.05.1995 JP 11583695**

(43) Date of publication of application:
**20.11.1996 Bulletin 1996/47**

(73) Proprietor:
**Sumitomo Rubber Industries Ltd.**
**Kobe-shi, Hyogo 651 (JP)**

(72) Inventor: **Hanya, Masahiro**
**Kobe-shi, Hyogo-ken (JP)**

(74) Representative:
**Stewart, Charles Geoffrey**
**Dunlop Tyres Ltd**
**Fort Dunlop, Erdington, Birmingham B24 9QT**
**(GB)**

(56) References cited:
**EP-A- 0 367 557**         **EP-A- 0 454 659**
**EP-A- 0 495 619**         **EP-A- 0 591 002**
**DE-A- 3 522 967**

• **PATENT ABSTRACTS OF JAPAN vol. 94, no. 010**
**& JP-A-06 297916 (OHTSU TIRE & RUBBER CO**
**LTD:THE), 25 October 1994,**

Printed by Xerox (UK) Business Services
2.16.7/3.6

**Description**

The present invention relates to a pneumatic tyre, more particularly to an improved tread pattern which is capable of improving steering stability, tyre uniformity and the like without increasing tread pattern noise.

In pneumatic tyres provided in the tread portion with blocks, lugs and the like (hereinafter referred to as tread elements) arranged circumferentially at a constant pitch, a large pattern noise at a specific frequency is liable to occur during running.

In order to reduce such pattern noise, there have been proposed, for example in JP-A-2-127103, the so called variable pitching methods, which disperse noise into a wide frequency range by, for example, using plural kinds of blocks having different circumferential lengths, or changing the circumferential widths of axial grooves, and thus prevent resonance. In those variable pitching methods, in order effectively to derive a noise reducing effect, the maximum pitch ratio, that is, the ratio (b/a) of the maximum length (b) to the minimum length (a) of the tread elements must be set at a large value. Accordingly, the rigidity of the tread elements becomes inevitably uneven. As a result, steering stability is decreased, tractive force variation increases and tyre uniformity is deteriorated.

It is therefore, an object of the present invention to provide a pneumatic tyre in which the pattern noise is effectively improved without spoiling the steering stability, tyre uniformity and the like.

According to one aspect of the present invention, a pneumatic tyre comprises rows of circumferentially arranged tread elements, the tread elements in each row having plural kinds of different circumferential lengths, axial grooves circumferentially dividing the tread elements in said each row having plural kinds of different circumferential widths, the circumferential widths of the axial grooves and the circumferential lengths of the tread elements in said each row satisfying

$$1.2 =< GR/BR =< 1.5$$

where

BR is the maximum length ratio defined by the ratio (Bll/Bss) of the maximum circumferential length (Bll) to the minimum circumferential length (Bss), and
GR is the maximum width ratio defined by the ratio (Gll/Gss) of the maximum circumferential width (Gll) to the minimum circumferential width (Gss).

In each row, preferably, the number of different circumferential lengths of the tread elements is equal to the number of different circumferential widths of the axial grooves.

As to the sequence of the tread elements in each row, preferably, the circumferential lengths are arranged in ascending and descending order.

Further, the sequence of the axial grooves may be such that each of the circumferential widths is adjacent to one of the circumferential lengths having the same order as the width, whereby the circumferential widths are arranged in ascending and descending order. In other words, the circumferential widths are respectively located on the same side of the circumferential lengths of the same order, wherein the "same side" is in the circumferential direction, and means for example the front side or rear side.

An embodiment of the present invention will now be explained according to the accompanying drawings.

Fig.1 is a cross sectional view a pneumatic tyre showing an embodiment of the present invention;
Fig.2 is a developed plan view showing an example of the tread pattern;
Fig.3 is a diagram showing a relationship between the ratio (GR/BR) and steering stability and pattern noise.

In Fig.l, the pneumatic tyre 1 is a low aspect ratio passenger tyre. The aspect ratio, which is the ratio H/WT of the tyre section height H to the maximum tyre width WT, is not more than 80 %, preferably not more than 60 %.

The tyre 1 comprises a tread portion 5, a pair of sidewall portions 4, a pair of bead portions 3 with a bead core 2 therein, a carcass 6 extended between the bead portions 3 though the tread portion 5 and sidewall portions 4 and turned up around the bead cores 2 to be secured thereto, and a stiff belt 7 disposed radially outside the carcass 6 and inside the tread portion 5.

The carcass 6 comprises at least one ply of cords arranged radially at an angle of from 90 to 60 degrees with respect to the tyre equator C to have the so called radial or semi-radial ply structure. For the carcass cords, organic fibre cords such as polyester, nylon, rayon and the like or steel cords can be used.

The belt 7 comprises one or more, in this embodiment two plies 7A and 7B of parallel cords laid at an angle of not more than 30 degrees with respect to the tyre equator C. The cords in each ply are oriented to cross the cords in the next ply. For the belt cords, metal cords. e.g. steel and the like or organic fibre cords, e.g. aramid, nylon, polyester, rayon and the like similarly to the carcass cords can be used.

The tread portion 5 is provided with a tread pattern comprising at least one row of circumferentially arranged tread elements, for example the so called block pattern or a block-rib pattern. The tread elements are divided in the tyre circumferential direction by axial grooves.

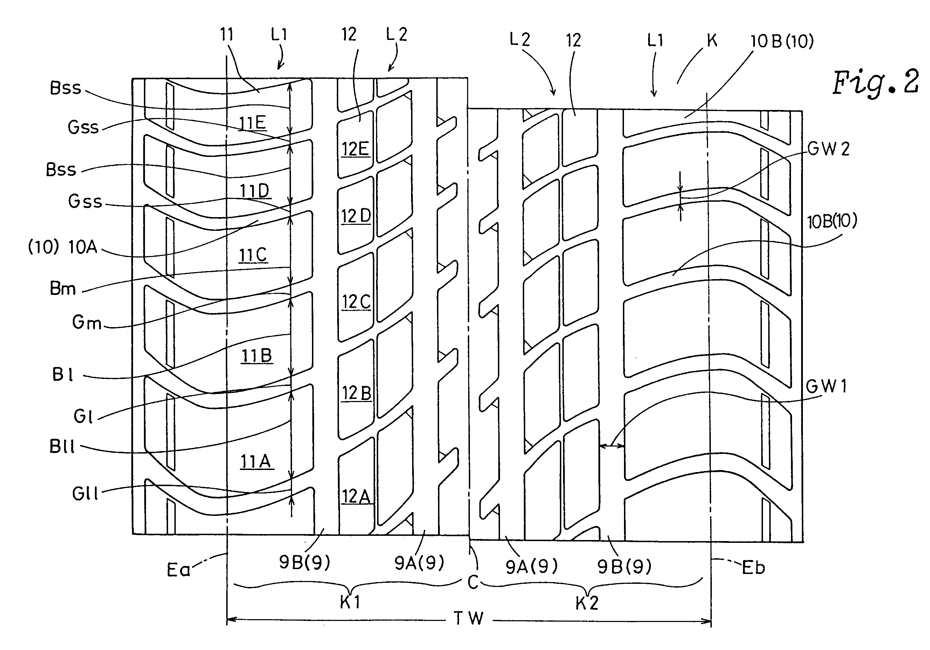

In this embodiment, as shown in Fig.2, the tread portion 5 is provided in the ground contacting width TW with tread grooves comprising circumferential grooves 9 extending circumferentially of the tyre and axial grooves 10 extending axially of the tyre to intersect the circumferential grooves 9.

The circumferential grooves 9 in this embodiment comprise a pair of axially inner circumferential grooves 9A, each disposed in each side of the tyre equator C, and a pair of axially outer circumferential grooves 9B, each disposed axially outside of one of the inner circumferential grooves 9A.

The axial grooves 10 in this embodiment comprise right axial grooves 10B extending axially inwardly from the right tread edge Eb and left axial grooves 10A extending axially inwardly from the left tread edge Ea. All the axial grooves 10 terminate near but before the tyre equator C.

In the tread portion, therefore, two rows L1 of shoulder blocks 11, two rows L2 of middle blocks 12, and one circumferentially continuously extending centre rib are formed.

Here, the circumferential grooves 9 are grooves having a width GW1 of not less than 5 mm and not less than 3% of the tread width TW at the tread face K.

In this example, the depth of all the circumferential grooves 9 is substantially constant along the entire length, and all the circumferential grooves 9 are straight. The depth of all the axial grooves 10 also is substantially constant.

However, zigzag or wavy configurations can be used for the circumferential grooves 9 instead of the straight grooves. The axial grooves may be terminated near but slightly beyond the tyre equator C, still maintaining the continuity of the centre rib in the circumferential direction. Further, it is possible to connect the right grooves 10B to the left grooves 10A at the tyre equator C to form axial grooves extending continuously from one tread edge Ea to the other tread edge Eb.

The tread pattern in this embodiment is a so called symmetrical pattern, that is, it is a non-directional pattern, and only the phase in the right tread half K2 is shifted with respect to the phase in the left tread half K1. Thus, the following description will be made mainly on one tread half for convenience sake.

The tread elements in each row, that is, the blocks 11 and 12 have three to five different circumferential lengths. In this embodiment, the shoulder blocks 11A to 11E in each row L1, and the middle blocks 12A to 12E in each row L2 have five different lengths Bll, Bl, Bm, Bs and Bss.

$$Bll > Bl > Bm > Bs > Bss$$

The axial grooves which circumferentially divide the tread elements in each row also have different circumferential widths GW2, of which the number is the same as that of the circumferential lengths of the tread elements in the same row.

To be exact in this embodiment, the part of the axial grooves 10A (or 10B) which circumferentially divide the blocks 11, 12 in each row L1, L2 have five different circumferential widths Gll, Gl, Gm, Gs and Gss.

$$Gll > Gl > Gm > Gs > Gss$$ In Fig.2, the circumferential lengths of the blocks and the circumferential widths of the axial grooves are somewhat exaggerated.

In each row L1, L2, the sequence of the five different circumferential lengths in the tyre circumferential direction are

Bll, Bl, Bm, Bs, Bss and the sequence of the five different circumferential widths in the tyre circumferential direction are

Gll, Gl, Gm, Gs, Gss.

The relative circumferential positions thereof are such that the widths are respectively disposed next to the lengths having the same ranking or order as the width.

For example, as shown in Fig.2, in the left side row L1, the widths Gll, Gl, Gm, Gs, Gss are located on the underside of the lengths Bll, Bl, Bm, Bs, Bss, respectively, but on the upperside in the right side row L1.

When the entire circumference of the tyre is considered, the sequence of the circumferential lengths is such that a gradual increase and a gradual decrease are repeated alternately as follows.

```
Bm  Bl  Bll  Bl  Bm  Bs  Bss  Bs  Bm  Bl  Bll  Bl

       <   <    >   >   >   >    <   <   <   <    >
```

and the differences in length between the circumferentially adjacent blocks are substantially constant. Thus, the sequence of the circumferential widths is as follows.

Gm  Gl  Gll  Gl  Gm  Gs  Gss  Gs  Gm  Gl  Gll  Gl

<  <  >  >  >  >  <  <  <  <  >

As to the sequence of the tread elements or blocks in a row, it is not preferable that the maximum length (Bll) and the minimum length (Bss) are disposed circumferentially adjacent to each other. It is, however, possible for lengths differed from each other by two ranking to be disposed circumferentially adjacent to each other. For example, (Bll and Bm), (Bl and Bs), (Bm and Bss). It is also possible to dispose blocks having the same length adjacently to each other.

In the blocks 11A to 11E in each row L1, the length maximum ratio (BR) is set in the range of from 1.1 to 1.5, preferably in the range of 1.15 to 1.25, wherein the length maximum ratio (BR) is the ratio (Bll/Bss) of the maximum circumferential length (Bll) of the longest blocks 11A to the minimum circumferential length (Bss) of the shortest blocks 11E.

If the length maximum ratio (BR) is less than 1.1, it becomes difficult to reduce the pattern noise. If the length maximum ratio (BR) is more than 1.5, the blocks 11 becomes uneven in rigidity, and tyre uniformity is degraded. Further, steering stability is liable to be deteriorated.

Further, the differences in length between the adjacent blocks are preferably evened as explained above.

Further, in the axial grooves 10A, the ratio (GR/BR) is set in the range of 1.2 to 1.5, wherein GR is the width maximum ratio (GR) defined as the ratio (Gll/Gss) of the maximum circumferential width (Gll) of the widest axial grooves to the minimum circumferential width (Gss) of the narrowest axial grooves.

In the same manner as the lengths of the blocks, the differences in circumferential width between the adjacent axial grooves in each block row are evened.

The above-explanation is based on row L1, but row L2 is also constructed in the same manner as L1. In this embodiment, therefore, all the rows L1, L2, L2, L1 are constructed as explained above because the pattern is symmetrical.

As to the relationship between the axially adjacent rows L1 and L2, as shown in Fig.2, the sequences of the blocks are the same but shifted by one ranking or one order in the circumferential direction of the tyre.

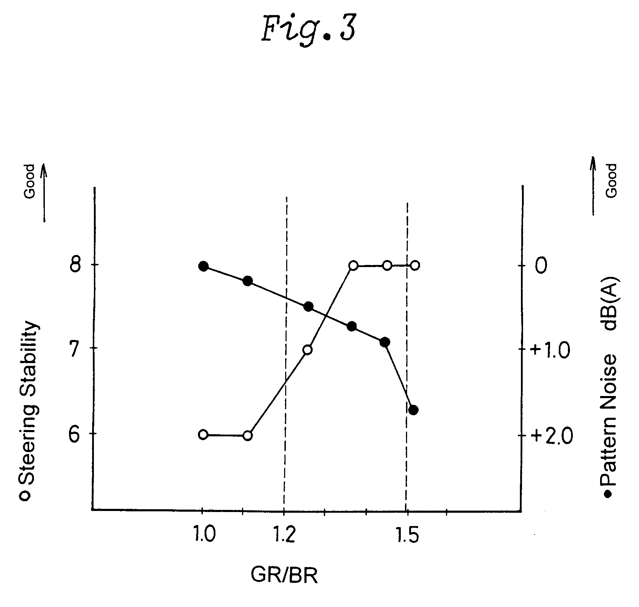

Fig.3 shows relationships between the ratio (GR/BR) and steering stability and pattern noise. The steering stability was evaluated into ten ranks, and the pattern noise is indicated in dB as the difference from the value when (GR/BR)=1 .

When the ratio (GR/BR) exceeds about 1.2, the block rigidity is evened and the steering stability is remarkably improved. However, as the ratio reaches 1.5, the steering stability also reaches its limit.

When the ratio (GR/BR) is less than about 1.5, the pattern noise is reduced. However, when the ratio exceeds 1.5, the block length variation becomes too small, and the pattern noise can not be reduced.

When the ratio (GR/BR) is in the range of 1.2 to 1.5, the tyre uniformity is maintained within a normal level.

Incidentally, the circumferential lengths of the blocks and the circumferentially widths of the axial grooves in each row are measured at the same axial position, that is, in a section parallel to the tyre equatorial plane.

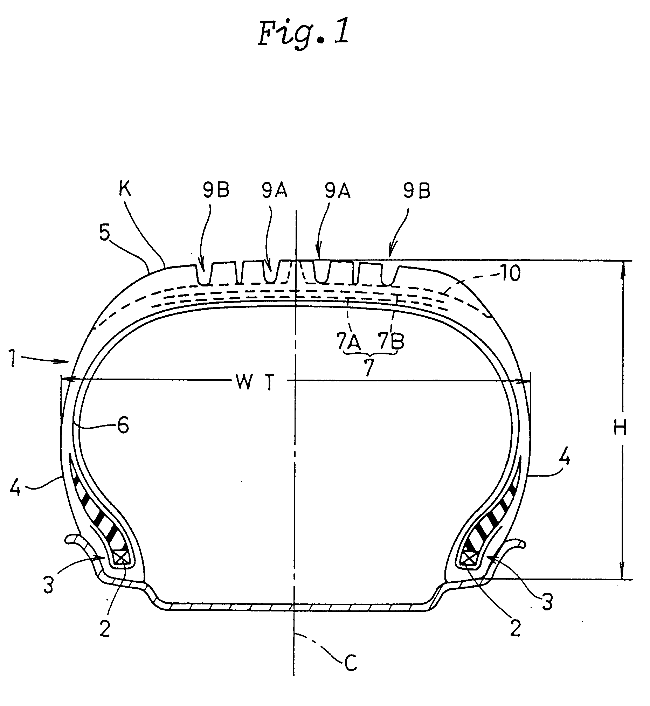

Test tyres having a size 205/60R15 were made and tested for the following performances. The test tyres had the tread pattern shown in Fig.1 having five block lengths Bll, Bl, Bm, Bs, Bss and five groove widths Gll, Gl, Gm, Gs, Gss. (Bm=23.41 mm, Gm=4.68 mm) The specifications are given in Table 1.

A) Pattern noise test

A 2500cc RW car provided on the front and rear axles with the test tyres was run on a smooth road surface at a speed of 80km/h, and the overall noise level dB(A) was measured near one of the driver's ears. All four tyres were mounted on standard size 15X6-JJ aluminum rim wheel and inflated to 200 Kpa. The measured noise level is shown Table 1 as the difference from the conventional tyre.

B) Road noise test

The same test car was run on a dry rough asphalt road surface, and the overall noise level dB(A) during running at a constant speed of 50 km/h was measured with a road noise meter. The measured noise level is shown Table 1 as the difference from the conventional tyre.

C) Tyre uniformity test

Using a cornering tester, the tractive force variation (TFV) of the test tyre was measured at a speed of 80 km/h. The difference from the conventional tyre is shown in Table 1. The smaller the difference, the better the tyre uniformity.

D) Dry and Wet Steering stability test and Ride comfort test

In the same condition as the above-mentioned pattern noise test, the test car was run on dry and wet asphalt road surfaces on a test course, and the driver evaluated the performances into ten ranks based on the conventional tyre as rank six (standard). The higher the rank, the better the performance. Here, rank eight means a remarkably good level.

Table 1

| Tyre | Conv. | Ex.1 | Ex.2 | Ex.3 | Ref.1 | Ref.2 |
|---|---|---|---|---|---|---|
| G11/Gm | 1.25 | 1.25 | 1.25 | 1.25 | 1.25 | 1.25 |
| Gss/Gm | 0.75 | 0.75 | 0.57 | 0.75 | 0.75 | 0.75 |
| GR | 1.67 | 1.67 | 1.67 | 1.67 | 1.67 | 1.67 |
| B11/Bm | 1.25 | 1.10 | 1.20 | 1.05 | 1.20 | 1.05 |
| Bss/Bm | 0.75 | 0.90 | 0.90 | 0.90 | 0.80 | 0.95 |
| BR | 1.67 | 1.22 | 1.33 | 1.17 | 1.50 | 1.11 |
| GR/BR | 1.00 | 1.36 | 1.25 | 1.43 | 1.11 | 1.51 |
| Pattern noise dB(A) | 0 | +0.7 | +0.5 | +0.9 | +0.2 | +0.7 |
| Road noise dB(A) | 0 | 0 | 0 | 0 | 0 | 0 |
| TFV (kgf) | 0 | -5.4 | -4.1 | -6.0 | -0.4 | -6.9 |
| Steering stability (DRY) | 6 | 8 | 7 | 8 | 6 | 8 |
| Steering stability (WET) | 6 | 8 | 7 | 8 | 6 | 8 |
| Ride comfort | 6 | 6 | 6 | 6 | 6 | 6 |

From the test results, it was confirmed that the Example tyres 1 to 3 show a tendency to increase in pattern noise as the block length maximum ratio (BR) decreases, but the noise level can be maintained at a reduced low level, while improving the steering stability.

It is remarkable that the steering stability is improved up to rank 8.

In the reference tyre 1, as the ratio (GR/BR) was small, the steering stability could not be improved.

In the reference tyre 2, the steering stability could be increased, but the pattern noise could not be reduced.

Further, changing the number of the block lengths and grove widths, test tyres having the same size of 205/60R15 were made and the same tests were conducted. The tread pattern was similar to that shown in Fig.1, but the block lengths Bll, Bm, Bss were decreased to three, and the groove widths Gll, Gm, Gss were also decreased to three. (Bm=23.41 mm, Gm=4.68 mm) The specifications are given in Table 2.

Table 2

| Tyre | Conv. | Ex.4 | Ex.5 | Ref.3 | Ref.4 |
|---|---|---|---|---|---|
| G11/Gm | 1.15 | 1.20 | 1.25 | 1.25 | 1.15 |
| Gss/Gm | 0.85 | 0.80 | 0.75 | 0.75 | 0.85 |
| GR | 1.35 | 1.50 | 1.67 | 1.67 | 1.35 |
| B11/Bm | 1.15 | 1.10 | 1.10 | 1.05 | 1.10 |
| Bss/Bm | 0.85 | 0.90 | 0.90 | 0.95 | 0.90 |

Table 2 (continued)

| Tyre | Conv. | Ex.4 | Ex.5 | Ref.3 | Ref.4 |
|---|---|---|---|---|---|
| BR | 1.35 | 1.22 | 1.22 | 1.11 | 1.22 |
| GR/BR | 1.00 | 1.23 | 1.37 | 1.50 | 1.11 |
| Pattern noise dB(A) | 0 | +0.7 | +0.3 | +1.8 | +1.4 |
| Road noise dB(A) | 0 | 0 | 0 | 0 | 0 |
| TFV (kgf) | 0 | -5.8 | -5.5 | -7.5 | -5.9 |
| Steering stability (DRY) | 6 | 8 | 7 | 8 | 8 |
| Steering stability (WET) | 6 | 8 | 7 | 7 | 8 |
| Ride comfort | 6 | 6 | 6 | 6 | 6 |

It was also confirmed through the tests that the example tyres 4 and 5 according to the present invention are superior to the conventional tyre and reference tyres 3 and 4.

As described above, the pneumatic tyres according to the present invention can be improved in the steering stability, tyre uniformity and the like, while reducing the pattern noise.

**Claims**

1. A pneumatic tyre comprising rows (L1,L2) of circumferentially arranged tread elements (11,12), the tread elements (11A....11E) in each row having plural kinds of different circumferential lengths (B11....Bss), axial grooves (G) circumferentially dividing the tread elements in each row having plural kinds of different circumferential widths, characterised in that the circumferential widths (G11....Gss) of the axial grooves and the circumferential lengths of the tread elements in said each row satisfying

$$1.2 =< GR/BR =< 1.5$$

where

BR is the length maximum ratio defined by the ratio (Bll/Bss) of the maximum circumferential length (Bll) to the minimum circumferential length (Bss), and
GR is the width maximum ratio defined by the ratio (Gll/Gss) of the maximum circumferential width (Gll) to the minimum circumferential width (Gss).

2. A pneumatic tyre according to claim 1, characterised in that in said each row, the number of the different circumferential lengths of the tread elements is equal to the number of the different circumferential widths of the axial grooves, and the circumferential lengths and the circumferential widths are arranged in the circumferential direction while alternately repeating an ascending order and a descending order.

3. A pneumatic tyre according to claim 2, characterised in that the circumferential widths are respectively located adjacent to and on the same side of the circumferential lengths having the same order.

**Patentansprüche**

1. Luftreifen, umfassend Reihen (L1, L2) aus in Umfangsrichtung angeordneten Laufstreifenelementen (11, 12), wobei die Laufstreifenelemente (11A....11E) in jeder Reihe mehrere Arten von unterschiedlichen Umfangslängen (Bll....Bss) aufweisen, wobei Axialrillen (G) die Laufstreifenelemente in jeder Reihe in Umfangsrichtung unterteilen und mehrere Arten von unterschiedlichen Umfangsbreiten aufweisen, dadurch gekennzeichnet, daß die Umfangsbreiten (Gll....Gss) der Axialrillen und die Umfangslängen der Laufstreifenelemente in jeder Reihe

$$1,2 =< GR/BR =< 1,5$$

erfüllen, wobei

BR das Längenmaximumverhältnis ist, das durch das Verhältnis (Bll/Bss) der maximalen Umfangslänge (Bll) zur minimalen Umfangslänge (Bss) definiert ist, und

GR das Breitenmaximumverhältnis ist, das durch das Verhältnis (Gll/Gss) der maximalen Umfangsbreite (Gll) zur minimalen Umfangsbreite (Gss) definiert ist.

**2.** Luftreifen nach Anspruch 1,

dadurch gekennzeichnet, daß in jeder Reihe die Anzahl der unterschiedlichen Umfangslängen der Laufstreifenelemente gleich der Anzahl der unterschiedlichen Umfangsbreiten der Axialrillen ist, und daß die Umfangslängen und die Umfangsbreiten in der Umfangsrichtung angeordnet sind, während sie abwechselnd eine aufsteigende Ordnung und eine absteigende Ordnung wiederholen.

**3.** Luftreifen nach Anspruch 2,

dadurch gekennzeichnet, daß die Umfangsbreiten sich jeweils benachbart zu und auf der gleichen Seite der Umfangslängen befinden, die die gleiche Ordnung aufweisen.

## Revendications

**1.** Pneumatique comprenant des rangées (L1, L2) d'éléments de bande de roulement disposées circonférentiellement (11, 12), les éléments de bande de roulement (11A...11E) de chaque rangée ayant plusieurs types de longueurs circonférentielles différentes (Bll...Bss), les gorges axiales (G) divisant circonférentiellement les éléments de bande de roulement de chaque rangée ayant plusieurs types de largeurs circonférentielles différentes, caractérisé en ce que les largeurs circonférentielles (Gll...Gss) des gorges axiales et les longueurs circonférentielles des éléments de bande de roulement de chaque rangée remplissent la condition :

$$1,2 \leq GR/BR \leq 1,5$$

BR étant le rapport maximal de longueur défini par le

rapport (Bll/Bss) de la longueur circonférentielle maximale (Bll) à la longueur circonférentielle minimale (Bss), et

GR étant le rapport maximal de largeur défini par le rapport (Gll/Gss) de la largeur circonférentielle maximale (Gll) à la largeur circonférentielle minimale (Gss).

**2.** Pneumatique selon la revendication 1, caractérisé en ce que, dans chaque rangée, le nombre de longueurs circonférentielles différentes d'éléments de bande de roulement est égal au nombre de largeurs circonférentielles différentes de gorges axiales, et les longueurs circonférentielles et les largeurs circonférentielles sont disposées en direction circonférentielle tout en se répétant alternativement dans un ordre ascendant et dans un ordre descendant.

**3.** Pneumatique selon la revendication 2, caractérisé en ce que les largeurs circonférentielles sont placées respectivement près des longueurs circonférentielles de même ordre et du même côté que ces longueurs.

# Fig.1

Fig.2

# Fig.3